# EUROPEAN PATENT APPLICATION

(11) **EP 2 239 610 A1**
(43) Date of publication of application: **13.10.2010**
(21) Application number: 09705740.0
(22) Date of filing: 08.01.2009
(51) Int. Cl.: G02B 7/04, F03G 7/06

(54) **DRIVE MODULE, AND ELECTRONIC DEVICE HAVING THE SAME**

(30) Priority: 30.01.2008 JP 2008018952
(71) Applicant: Seiko Instruments Inc., Chiba-shi, Chiba 261-8507 (JP)
(72) Inventor: KUME, Akira, Chiba-shi Chiba 261-8507 (JP)
(74) Representative: Cloughley, Peter Andrew
(86) International application number: PCT/JP2009/050106
(87) International publication number: WO 2009/096207

(57) **Abstract**

Disclosed are a driving module and an electronic apparatus including the same, which are capable of performing satisfactory driving even under high-temperature environment and of being miniaturized. The driving module (1) includes: a lens frame (4) provided with a guide protrusion (4D); and a support including a module lower plate (8) for positioning the lens frame (4) at a reference position, and a module frame (5) for housing the lens frame (4) movably. Further, the driving module (1) includes: an upper plate spring (6) and a lower plate spring (7) that are attached so as to extend in a direction orthogonal to a driving direction between the lens frame (4) and the support, and are placed so as to be opposed to each other in parallel under an unloaded state; a shape memory alloy wire (10) that is stretched over a tubular outer circumferential portion of the module frame (5), and that is provided with an intermediate portion locked on the guide protrusion (4D); a compression coil spring (40) that abuts at one end thereof against the guide protrusion (4D), and that allows the guide protrusion (4D) to abut against the module lower plate (8) under a condition that the shape memory alloy wire (10) is deenergized, to thereby preload the guide protrusion (4D); and a cover (11) for supporting the other end of the compression coil spring (40).

## Description

### Technical Field

The present invention relates to a driving module and an electronic apparatus including the same. For example, the present invention relates to a driving module, which is suited for adjusting a focal position by driving an optical system or a mobile member or for being used as an actuator, and relates to an electronic apparatus including the driving module.

### Background Art

Conventionally, for example, in small electronic apparatuses such as mobile phones with cameras, there has been known an apparatus using a driving module for driving a body to be driven such as a photographing lens unit through a shape memory alloy wire.

As such a driving module and an electronic apparatus, Patent Document 1 describes a lens driving device including a first mirror frame with a lens group incorporated therein, a second mirror frame with the first mirror frame fixed thereto, which is attached movably in a guide axis along a driving direction, a shape memory alloy wire locked with the second mirror frame, which contracts to bias the second mirror frame in the driving direction when energized with a current, and a compression coil spring that biases the second mirror frame in the guide axis so as to press it onto the shape memory alloy wire, and a image pickup device with the lens driving device.

Patent Document 1: JP 2007-57581 A

### Disclosure of the Invention

### Problems to be solved by the Invention

However, the conventional driving module as described above has the following problems.

In the lens driving device described in Patent Document 1, a sliding load is generated because the second mirror frame is driven using the guide axis. For example, in order to obtain satisfactory driving characteristics, e.g., to enhance a focusing speed, it is necessary to reduce a biasing force caused by a compression coil spring, which leads to an increase in a driving load of the shape memory alloy wire. Therefore, in Patent Document 1, while the shape memory alloy wire is not energized, the shape memory alloy wire is extended by a slight amount due to the biasing force of the compression coil spring or has slight looseness, and a protrusion of the second mirror frame is allowed to stand still while abutting a head of a screw. Thus, at the start of energization, the biasing force applied from the shape memory alloy wire is extremely small or the biasing force does not function, and smooth driving can be performed even if there is a load of the guide axis to some extent.

Incidentally, the shape memory alloy has hysteresis characteristics regarding a distortion amount with respect to a temperature. Therefore, in order to perform precise driving, it is necessary, after decreasing the temperature to a transformation start temperature or lower every time driving is performed to return to a reference position of driving, to perform driving in one direction.

In the conventional lens driving device as in Patent Document 1, the driving device is operated without any problems when the environment temperature is at a transformation start temperature or lower of the shape memory alloy. However, when the environment temperature reaches a temperature in a transformation region of the shape memory alloy, the environment temperature is not decreased to a transformation start temperature or lower with natural radiation. Therefore, even when energization is stopped, the shape memory alloy wire is not extended to the length at a time of starting driving. The shape memory alloy wire is extended due to the biasing force of the compression coil spring to some extent. However, the biasing force of the compression coil spring is extremely small in the vicinity of the reference position of driving, and hence, the shape memory alloy wire cannot be extended completely. Thus, under high-temperature environment, a positional error in a reference position of driving occurs, which makes it impossible to perform precise driving.

The present invention has been made in view of the above-mentioned problems, and has an object to provide a driving module that is capable of performing satisfactory driving even under high-temperature environment and of being miniaturized, and an electronic apparatus including the driving module.

### Means for solving the Problems

In order to achieve the above-mentioned object, according to the invention of claim 1, a driving module includes a body to be driven that is formed of a columnar body with an axis placed in a driving direction, and that is provided with a protrusion protruding to a side of the columnar body; a support including an abutting support portion that positions the body to be driven at a reference position in the driving direction, and a tubular portion that movably houses the body to be driven in the driving direction; a parallel plate spring pair that is attached so as to extend in a direction orthogonal to the driving direction between the body to be driven and the support, and that is placed so as to be opposed to each other in parallel under an unloaded state; a shape memory alloy wire that is stretched over a tubular outer circumferential portion of the support, and that is provided with an intermediate portion locked on the protrusion of the body to be driven; a coil spring member that abuts at one end thereof against the protrusion of the body to be driven, and that allows the protrusion to abut against the abutting support portion of the support under a condition that the shape memory alloy wire is deenergized, to thereby preload the protrusion; and a coil spring support portion that supports another end of the coil spring member.

According to the present invention, the body to be driven is elastically supported with respect to the support by the parallel plate spring pair placed so as to be opposed to each other in parallel under the unloaded state. Therefore, the body to be driven is supported movably in the driving direction without using means for generating a sliding load, such as a sliding guide.

Further, when the shape memory alloy wire is not energized, the body to be driven abuts against the abutting support portion while one end of the protrusion is preloaded by the coil spring member in which the another end is supported by the coil spring support portion. Thus, for example, even in the case where the shape memory alloy wire is not extended completely even if the energization of the shape memory alloy wire is stopped when the environment temperature reaches a transformation start temperature or higher, the shape memory alloy wire is extended to allow the protrusion to abut against the abutting support portion by setting the magnitude of a preload at an appropriate value.

Further, compared with the case where the body to be driven is preloaded only with the parallel plate spring pair by preloading the body to be driven only with the coil spring member without preloading with the parallel plate spring pair, the thickness of the apparatus in the driving direction can be reduced. Further, this facilitates the production and assembly of the parallel plate spring pair.

The columnar body of the body to be driven is used in a wide meaning including all the embodiments in which the outer shape is a substantially columnar shape. Thus, the columnar body of the body to be driven is not limited to a solid columnar body and also includes, for example, a tubular body provided with a through-hole at the center. Further, the columnar body also includes an assembly such as a lens assembly as long as the outer shape is a substantially columnar shape.

According to the invention of claim 2, in the driving module according to claim 1, the coil spring member is formed of a compression coil spring attached in the driving direction while being compressed, and the one end abuts against the protrusion at a position opposed to a locking position of the shape memory alloy wire.

The coil spring member abuts against the protrusion at the position opposed to the locking position of the shape memory alloy wire. Therefore, the resultant force of the shape memory alloy wire and the biasing force from the coil spring member act on each other in a substantially straight line. Therefore, the moment applied to the body to be driven by the driving force of the shape memory alloy wire can be reduced, and hence, stable driving can be performed.

Further, compared with the case of using a tensile coil spring as the coil spring member, the coil spring member can be placed easily, which facilitates miniaturization.
According to the invention of claim 3, in the driving module according to claim 1 or 2, the protrusion of the body to be driven includes the coil spring support portion having 1/3 or more of a natural length of the coil spring.

According to the present invention, the tilt of the coil spring member during assembly is prevented, which can enhance an assembly property.

According to the invention of claim 4, an electronic apparatus includes the driving module according to any one of claims 1 to 3.

According to the invention described above, due to the presence of the driving module, the function similar to that of the invention according to any one of claims 1 to 3 is provided.

### Brief Description of the Drawings

[FIG. 1] A schematic exploded perspective view illustrating an attachment state of a driving module according to Embodiment 1 of the present invention with respect to a substrate.
[FIG. 2] A schematic exploded perspective view illustrating a schematic configuration of the driving module according to Embodiment 1 of the present invention.
[FIGS. 3] A plan view seen from the arrow A in FIG. 1 and a cross-sectional view taken along the line B-B in FIG. 1.
[FIG. 4] A schematic perspective view illustrating an internal configuration of an assembled state of the driving module according to Embodiment 1 of the present invention.
[FIG. 5] A cross-sectional view taken along the line C-C in FIG. 4.
[FIG. 6] A schematic perspective view illustrating a part of the body to be driven used in the driving module according to Embodiment 1 of the present invention.
[FIGS. 7] A plan view seen from the arrow D in FIG. 6 and a back view seen from the arrow E in FIG. 6.
[FIGS. 8] A schematic perspective view of a module frame used in the driving module according to Embodiment 1 of the present invention and a back view seen from the arrow F in FIG. 8.
[FIG. 9] A plan view of a plate spring member used in the driving module according to Embodiment 1 of the present invention.
[FIG. 10] A schematic perspective view of a module lower plate used in the driving module according to Embodiment 1 of the present invention.
[FIG. 11] A plan view of a feeding member used in the driving module according to Embodiment 1 of the present invention.
[FIG. 12] A back view of a cover used in the driving module according to Embodiment 1 of the present invention.
[FIG. 13] A schematic cross-sectional view taken along the line B-B in FIG. 3(a), for illustrating an operation of the driving module according to Embodiment 1 of the present invention.
[FIGS. 14] External perspective views of a front surface and a back surface of an electronic apparatus according to Embodiment 2 of the present invention, and a cross-sectional view taken along the line G-G.
[FIG. 15] A schematic perspective view illustrating an internal configuration of an assembled state of a driving module according to a modification of Embodiment 1 of the present invention.

### Best Mode for carrying out the Invention

Hereinafter, embodiments of the present invention are described with reference to the attached drawings. In all the figures, the same or corresponding members are denoted with the same reference symbols and the repeated description is omitted, even in the case where embodiments are different.

### [Embodiment 1]

A driving module according to Embodiment 1 of the present invention is described.

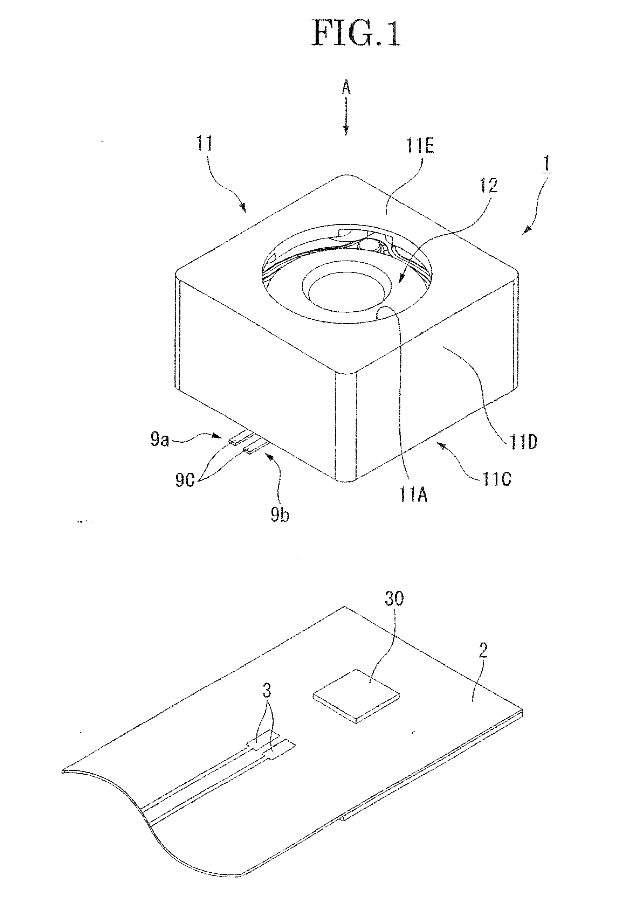

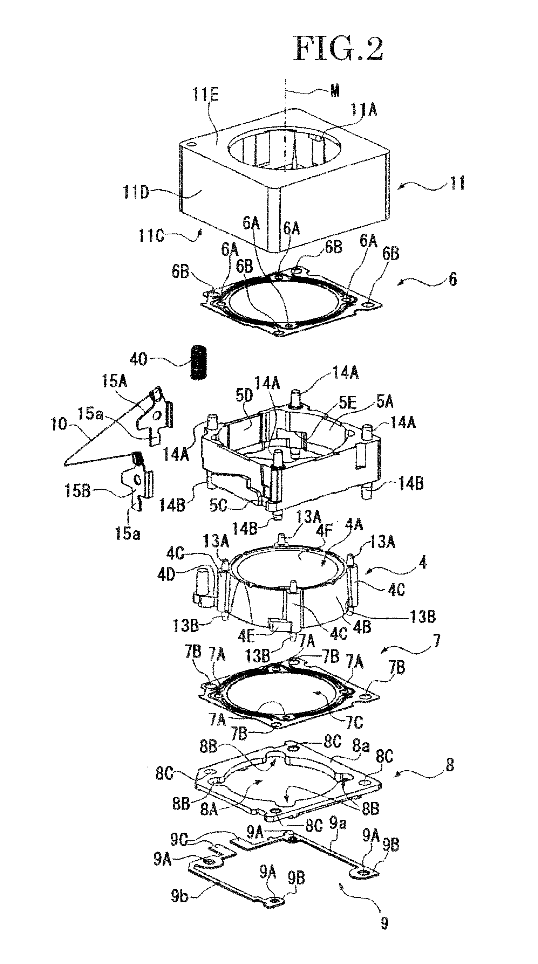

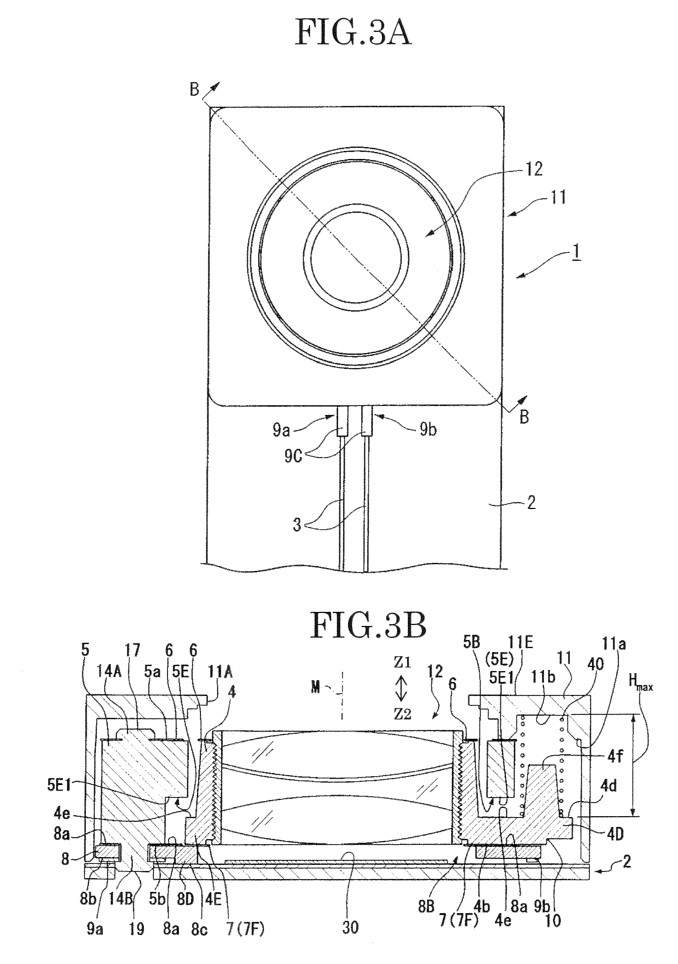

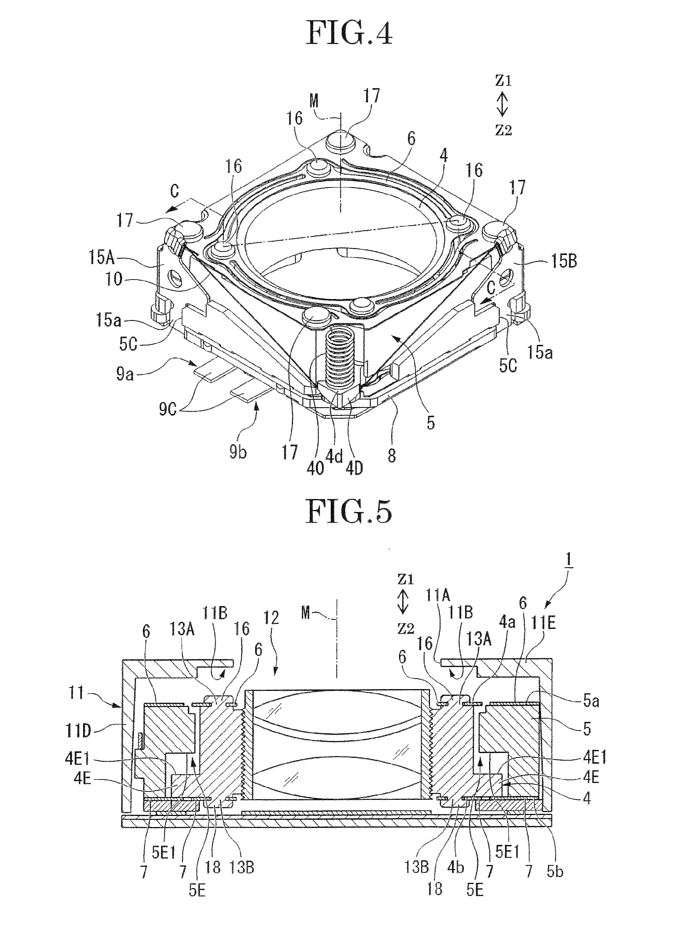

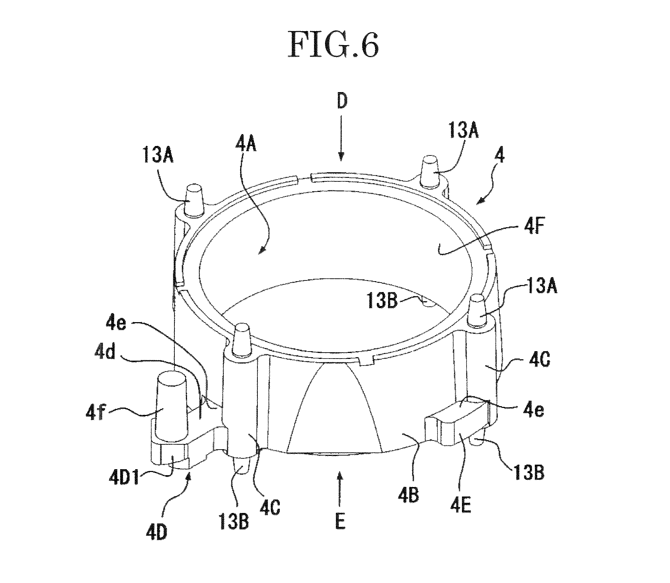

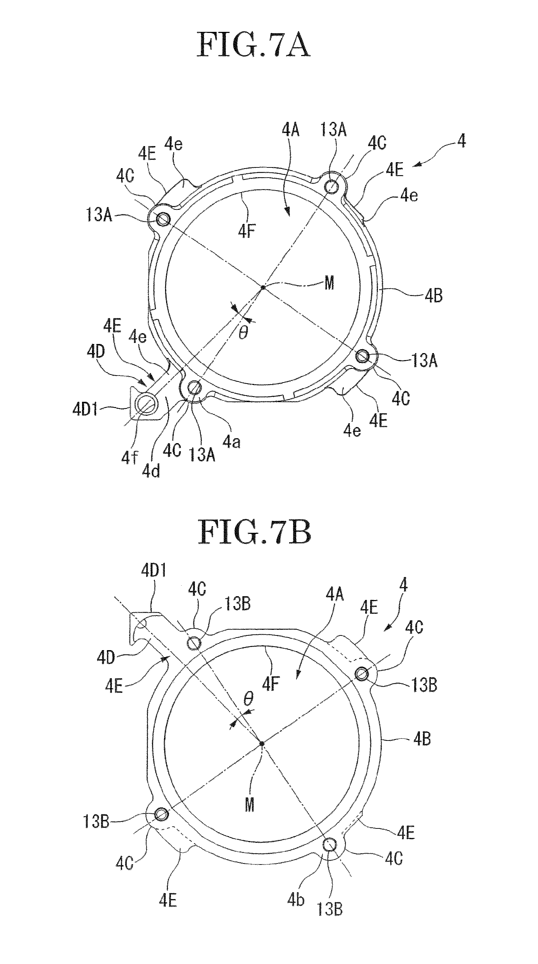

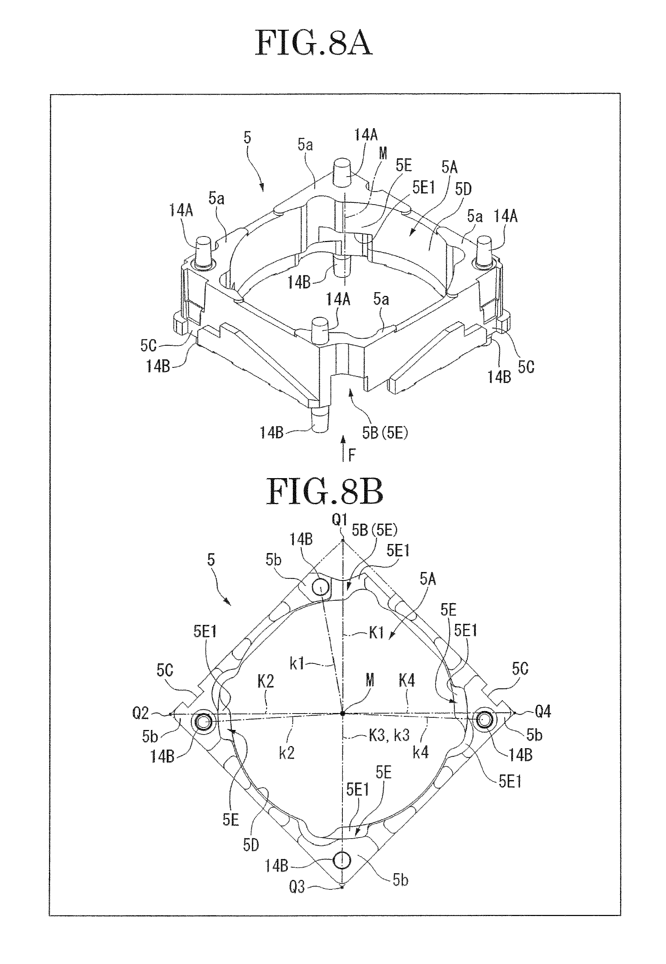

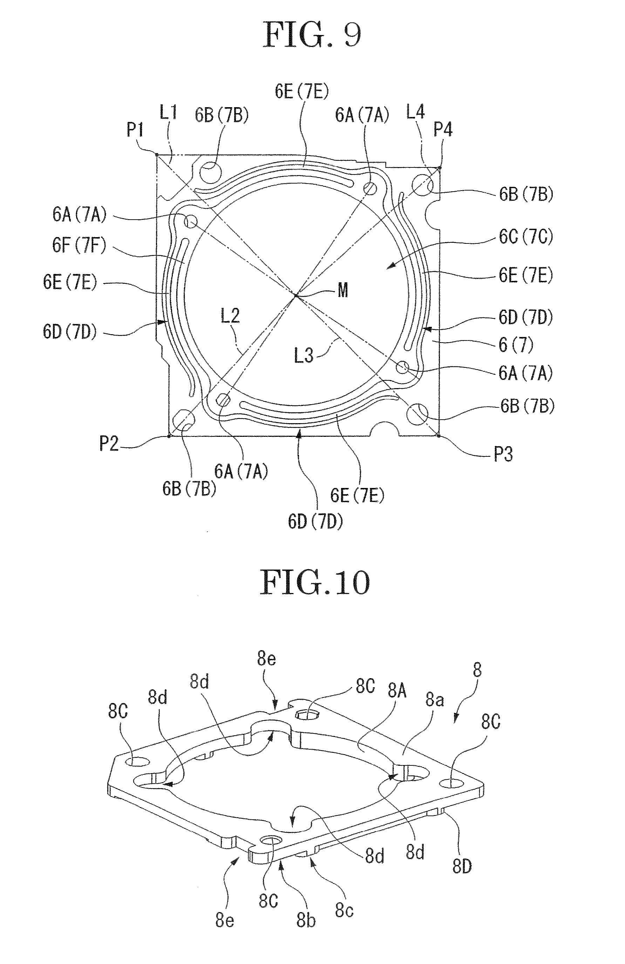

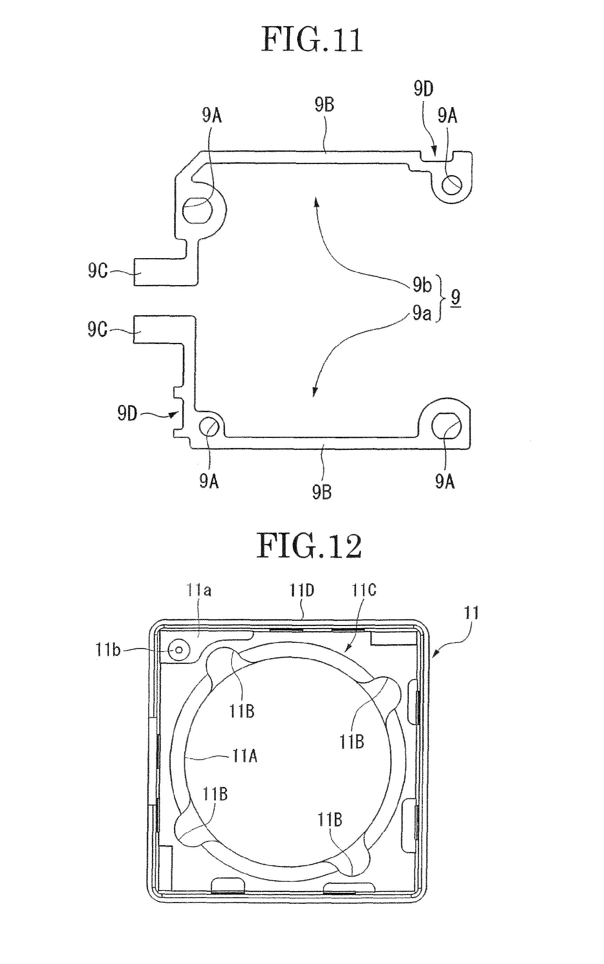

FIG. 1 is a schematic exploded perspective view illustrating an attachment state of a driving module according to Embodiment 1 of the present invention with respect to a substrate. FIG. 2 is a schematic exploded perspective view illustrating a schematic configuration of the driving module according to Embodiment 1 of the present invention. FIG. 3(a) is a plan view seen from the arrow A in FIG. 1. FIG. 3(b) is a schematic cross-sectional view taken along the line B-B in FIG. 3(a). FIG. 4 is a schematic perspective view illustrating an internal configuration of an assembled state of the driving module according to Embodiment 1 of the present invention. FIG. 5 is a cross-sectional view taken along the line C-C in FIG. 4. FIG. 6 is a schematic perspective view illustrating a part of the body to be driven used in the driving module according to Embodiment 1 of the present invention. FIGS. 7(a) and 7(b) are a plan view seen from the arrow D in FIG. 6 and a back view seen from the arrow E in FIG. 6, respectively. FIG. 8(a) is a schematic perspective view of a module frame used in the driving module according to Embodiment 1 of the present invention. FIG. 8(b) is a back view seen from the arrow F in FIG. 8(a). FIG. 9 is a plan view of a plate spring member used in the driving module according to Embodiment 1 of the present invention. FIG. 10 is a schematic perspective view of a feeding member used in the driving module according to Embodiment 1 of the present invention. FIG. 11 is a plan view of a module lower plate used in the driving module according to Embodiment 1 of the present invention. FIG. 12 is a back view of a cover used in the driving module according to Embodiment 1 of the present invention.

In a part of the drawings, for ease of seeing, components such as the lens unit 12 are omitted appropriately.

The driving module 1 of this embodiment is formed in a box shape as a whole as illustrated in FIG. 1. The driving module 1 in an assembled state is provided in an electronic apparatus or the like and is fitted onto or adhered to a substrate 2 supplying a control signal and power to the driving module 1, whereby the driving module 1 can be fixed.

On an upper surface of the substrate 2, there are provided a pair of land portions 3 connected to a feeding member of the driving module 1 described later so as to supply power and an image pickup element 30.

As illustrated in FIG. 2, the driving module 1 includes, as main components, a lens frame 4 (body to be driven), a lens unit 12 (body to be driven), a module frame 5 (support), an upper plate spring 6 and a lower plate spring 7 forming a part of plate springs parallel to each other, a module lower plate 8 (support), a feeding member 9, a shape memory alloy (hereinafter, abbreviated as an SMA) wire 10, a cover 11, and a compression coil spring 40, and those components are stacked integrally to constitute one actuator.

In the assembled state of those members, as illustrated in FIG. 3(b), the lens frame 4 into which the lens unit 12 is screwed is inserted in the module frame 5; the upper plate spring 6 and the lower plate spring 7 are fixed by caulking while sandwiching the lens frame 4 and the module frame 5 in an up-and-down direction in the figure; the module lower plate 8 and the feeding member 9 are stacked in this order from the lower side in the figure and fixed respectively by caulking from a lower side of the module frame 5; and a cover 11 covering those laminates from an upper side is fixed to the module lower plate 8.

Further, the compression coil spring 40 is held between the cover 11 and the lens frame 4 in a compressed state.

A symbol M in the figure denotes a virtual axis of the driving module 1 matched with the optical axis of the lens unit 12, and indicates the driving direction of the lens frame 4. In the following, for simplicity of the description, even in the description of exploded components, the position and direction may be referred to based on the positional relationship with the axis M at a time of assembly. For example, even in the case where a clear circle and cylindrical surface are not present in the components, as long as there is no fear of misunderstanding, the direction along the axis M may be referred to merely as an axial direction, and a radial direction and a circumferential direction of a circle with respect to the axis M may be referred to merely as a radial direction and a circumferential direction or a radial direction and a circumferential direction with respect to the axis M.

Further, the up-and-down direction refers to an up-and-down direction in the arrangement in the case where the axis M is placed in a vertical direction and the attachment surface of the driving module 1 is placed on a lower side of the vertical direction, unless otherwise specified.

Among the components, the lens frame 4 is formed in a tubular shape as a whole as illustrated in FIGS. 2 and 6, and a female screw is formed on an inner circumferential surface 4F of a housing portion 4A in a tubular shape, which passes through the center of the lens frame 4 and is formed coaxially with the axis M. Then, the lens unit 12 holding an appropriate lens or lens group on a lens barrel with a male screw formed on an outer circumferential portion (see FIGS. 3(b) and 5) can be screwed to be fixed to the housing portion 4A.

While the lens unit 12 is fixed at the lens frame 4, the lens unit 12 and the lens frame 4 constitute the body to be driven in a columnar body.

On an outer wall surface 4B of the lens frame 4, protrusions 4C protruding outward in a radial direction are provided so as to extend in the axial direction at an interval of 90° in a circumferential direction, and in upper ends and lower ends of the respective protrusions 4C and in the vicinity thereof, there are formed end surfaces 4a, 4b formed of planes orthogonal to the axis M. On the end surfaces 4a, 4b, four upper-side fixing pins 13A and lower-side fixing pins 13B, which respectively protrude upward and downward along the axis M are provided, respectively.

The upper-side fixing pins 13A hold the upper plate spring 6, and the lower-side fixing pins 13B hold the lower plate spring 7.

Although the positions of the upper-side fixing pins 13A and the lower-side fixing pins 13B in a planar view may be different from each other, they are placed in a positional relationship in which the above-mentioned positions are respectively coaxial with four axes parallel to the axis M in this embodiment. Therefore, the upper-side fixing pins 13A and the lower-side fixing pins 13B at the upper plate spring 6 and the lower plate spring 7 have insertion positions in common.

Further, although the respective center positions in the radial direction of the upper-side fixing pins 13A and the lower-side fixing pins 13B may be different in distance from the axis M, they are placed on the same circumference in this embodiment. Therefore, the respective center positions are placed in a tetragonal lattice shape (see FIGS. 7(a), 7(b)).

On the outer side in the radial direction of the lens frame 4, a guide protrusion 4D (protrusion) is provided so as to protrude outward in the radial direction from the lower end side in the vicinity of one protrusion 4C. The protruding direction of the guide protrusion 4D is set at a positional relationship shifted by an angle e (where e is an acute angle) from an integral multiple of 90° from the angular position in the circumferential direction of each upper-side fixing pin 13A and each lower-side fixing pin 13B with respect to the axis M. More specifically, when the guide protrusion 4D is placed along a diagonal line of a square, each upper-side fixing pin 13A and each lower-side fixing pin 13B are placed at a position shifted by a predetermined angle e from a diagonal line of a square.

The tip end of the guide protrusion 4D is provided at the tip end key portion 4D1 in a shape of an isosceles right triangle in a planar view, and is placed movably in an up and down direction along an angular portion on the inner side of the cover 11 described later. As illustrated in FIGS. 3(b) and 4, the SMA wire 10 is locked on the lower surface of the guide protrusion 4D from below in the assembled state.

Further, as illustrated in FIG. 3(b), a locking protrusion 4f is provided on the tip end side of the protrusion upper surface 4d that is an upper surface of the guide protrusion 4D. The position of the locking protrusion 4f may be shifted in a radial direction with respect to the axis M from the locking position of the SMA wire 10. However, in this embodiment, the position of the locking protrusion 4f is substantially matched with the locking position of the SMA wire 10.

The outer diameter of the locking protrusion 4f can be inserted in an inner circumferential portion of the compression coil spring 40, and is sized so as to be substantially inscribed with the inner circumferential portion of the compression coil spring 40 at a base end. Thus, when the compression coil spring 40 is inserted in the locking protrusion 4f from above, the compression coil spring 40 can be positioned in the circumferential direction with respect to the axis M while the end of the compression spring coil 40 is allowed to abut against the protrusion upper surface 4d.
The height of the locking protrusion 4f is set to be 1/3 or more of a natural length of the compression coil spring 40. Thus, during assembly, the compression coil spring 40 can be supported without being tilted even under the condition that the other end of the compression coil spring 40 is not supported.

Further, as illustrated in FIGS. 6(a), 7(a), and 7(b), positioning portions 4E in protrusion shapes are provided so as to extend in a circumferential direction from a side portion of each protrusion 4C along a lower portion of the outer wall surface 4B of the lens frame 4. It should be noted that the positioning portion 4E of the protrusion 4C, which include the guide protrusion 4D in the vicinity thereof, also serves as the base end portion of the guide protrusion 4D.

Each of the positioning portions 4E has a smooth positioning surface 4e on an upper surface thereof, and the position in the axial direction of the positioning surface 4e is set at a position where positioning portion 4E abuts against a positioning reception portion 5E of the module frame 5 described later (see FIG. 8(b)) when the lens frame 4 tries to move along the axis M upward (direction indicated by the arrow (Z1) of FIGS. 3(b) and FIG. 5) by a distance equal to or longer than a predetermined distance.

Further, in this embodiment, the lens frame 4 is molded integrally with a thermoplastic resin capable of being caulked with heat or ultrasonic wave, such as a polycarbonate (PC) or a liquid crystal polymer (LCP) resin.

As illustrated in FIGS. 2, 8(a), and 8(b), the module frame 5 is a tubular member whose outer shape in a planar view is formed in a substantially rectangular shape as a whole, and in which a housing portion 5A (tubular portion) formed of a through-hole is formed coaxially with the axis M in the center portion thereof. The lens frame 4 is housed in the housing portion 5A.

At upper and lower four corners of the module frame 5, there are formed end surfaces 5a, 5b formed of planes orthogonal to the axis M. Four upper-side fixing pins 14A are provided upward from the end surfaces 5a, and four lower-side fixing pins 14B are provided downward from the end surfaces 5b.

The upper-side fixing pins 14A hold the upper plate spring 6, and the lower-side fixing pins 14B hold the lower plate spring 7, the module lower plate 8, and the feeding member.

The distance between the end surfaces 5a, 5b is set to the same distance as that between the end surfaces 4a, 4b of the lens frame 4.

In a lower portion at one corner of the module frame 5, there is formed a cut-away portion 5B whose groove width in a planar view has a size that is fitted with the guide protrusion 4D of the lens frame 4 so as to move in the axial direction. The cut-away portion 5B allows the guide protrusion 4D of the lens frame 4 to pass through while the lens frame 4 is inserted to be housed in the module frame 5 from a lower side, allows the tip end key portion 4D1 of the guide protrusion 4D to protrude outward in the radial direction of the module frame 5, and determines the position of the lens frame 4 in the circumferential direction.

In this embodiment, the cut-away portion 5B is provided at such a position, and hence, as illustrated in FIG. 8(b), the lower-side fixing pin 14B in the vicinity of the cut-away portion 5B is formed at a position away from lines each connecting the axis M to points Q1, Q2 that are intersections of the corners of the outer shape avoiding the cut-away portion 5B. In contrast, the other three lower-side fixing pins 14B are respectively provided on a line connecting the axis M to the intersection of the corners of the outer shape or provided to be more adjacent to the above-mentioned line than in the above-mentioned the lower-side fixing pin 14B, and are placed forming an L-shape along the outer shape of the module frame 5. Thus, four lower-side fixing pins 14B are placed at positions asymmetrical to each other in a planar view.

Meanwhile, although the positions of the upper-side fixing pins 14A and the lower-side fixing pins 14B in a planar view may be different from each other, they are placed in a positional relationship in which the above-mentioned positions are respectively coaxial with four axes parallel to the axis M in this embodiment, respectively. Therefore, the upper-side fixing pins 14A and the lower-side fixing pins 14B at the upper plate spring 6 and the lower plate spring 7 have insertion positions in common.

As illustrated in FIG. 8(b), assuming that intersections on side surfaces of the module frame 5 are indicated by Q1, Q2, Q3, and Q4 in a planar view, the axis center of each upper-side fixing pin 14A and each lower-side fixing pin 14B are placed respectively in the vicinity of the points Q1, Q2, Q3, and Q4, and on or in the vicinity of line segments K1, K2, K3, and K4 connecting the points Q1, Q2, Q3, Q4 to the axis M. More specifically, the line segments k1, k2, k3, and k4 connecting the axis center of each upper-side fixing pin 14A and each lower-side fixing pin 14B to the axis M overlap the line segments K1, K2, K3, and K4, or cross them at a small angle of about 30° or less.

As illustrated in FIG. 8(a), at two corners adjacent to the cut-away portion 5B of the module frame 5, there is provided a pair of locking grooves 5C for attaching the wire holding members 15A, 15B for holding the SMA wire 10 (see FIGS. 2 and 4) on a side surface on the side in the same direction as that of the corner at which the cut-away portion 5B is provided. In this embodiment, the wire holding member 15A is provided on a side surface on the side from which a pair of terminal portions 9C of the feeding member 9 protrude from the driving module 1, and the wire holding member 15B is provided on a side surface on the side from which a pair of terminal portions 9C of the feeding member 9 do not protrude from the driving module 1.

The wire holding members 15A, 15B are conductive members made of a metal plate or the like formed in a key shape, obtained by caulking the ends of the SMA wire 10 onto the ends of the wire holding members 15A, 15B, and the wire holding members 15A, 15B are fitted in the locking grooves 5C from the side, thereby holding the ends of the SMA wire 10 while positioning the SMA wire 10.

The wire holding members 15A, 15B have chip-shaped terminal portions 15a on a side opposite to the caulking position of the SMA wire 10, as illustrated in FIG. 4, and under the attached state with respect to the module frame 5, the terminal portions 15a are allowed to protrude slightly downward from the module lower plate 8 stacked on the lower side of the module frame 5.

Further, the SMA wire 10 whose both ends are held by a pair of wire holding members 15A, 15B is locked from a lower side to the tip end key portion 4D1 of the guide protrusion 4D of the lens frame 4 protruding from the cut-away portion 5B of the module frame, and biases the lens frame 4 upward via the tip end key portion 4D1 due to the tension of the SMA wire 10.

In the housing portion 5A of the module frame 5, as illustrated in FIGS. 8(a), 8(b), the positioning reception portion 5E that is a concave formed from the inner wall surface 5D to the outer side in the radial direction and extending from the lower end side to the intermediate portion on the upper end side in the axial direction is formed in such a shape as to allow each positioning portion 4E of the lens frame 4 to be inserted from a lower side. It should be noted that the positioning reception portion 5E with respect to the positioning portion 4E also serving as the guide protrusion 4D is shared with a groove bottom potion of the cut-away portion 5B.

The positioning reception portion 5E has a receiving surface 5E1 capable of allowing the positioning surface 4e of the positioning portion 4E to abut against the positioning reception portion on a lower side in the axial direction. Thus, when the lens frame 4 moves upward along the axis M by a predetermined distance, the receiving surface 5E1 of each positioning reception portion 5E abuts against the positioning surface 4e of each positioning portion 4E. Therefore, the upward movement of the lens frame 4 is regulated. More specifically, the positioning reception portion 5E constitutes a position regulating portion that regulates the upward movement range of the lens frame 4, and the positioning portion 4E constitutes a portion whose position is to be regulated, provided so as to abut against the position regulating portion of the module frame 5.

In this embodiment, the position in a planar view where the positioning reception portion 5E is formed is provided at positions crossing the line segments K1, K2, K3, and K4 directed from the center (axis M) of the housing portion 5A to the corners of the rectangular outer shape of the module frame 5, as illustrated in FIG. 8(b).

Due to such a configuration, even when large shock is applied to the driving module from outside, for example, the driving module is dropped, the lens frame 4 cannot move upward, exceeding the position of the receiving surface 5E1 of the positioning reception portion 5E1.

In this embodiment, such a regulating position is set in such a manner that the lens frame 4 does not bump against the cover 11, and the deformation of the upper plate spring 6, the lower plate spring 7, the compression coil spring 40 is less than, for example, an elastic limit or a deformation limit relating to a close wound length of the coil.

The positioning reception portions 5E are provided at positions crossing the line segments K1, K2, K3, and K4 directed from the center of the housing portion 5A to the corners of the rectangular outer shape of the module frame 5, and hence a region in a radial direction from the housing portion 5A to the corners of the rectangular outer shape can be effectively used in the module frame 5.

Therefore, even if the positioning reception portions 5E are provided on an inner side of the module frame 5, the outer shape of the module frame 5 can be prevented from being increased, which enables miniaturization and reduction in weight.

Further, in this embodiment, the module frame 5 is integrally molded with a thermoplastic resin capable of being caulked with heat or an ultrasonic wave, such as a polycarbonate (PC) or a liquid crystal polymer (LCP) resin in the same way as in the lens frame 4.

On each upper portion and each lower portion of the module frame 5 and the lens frame 4 inserted therein, as illustrated in FIG. 5, the upper plate spring 6 and the lower plate spring 7 are stacked on the end surface 5a of the module frame 5 and the end surface 4a of the lens frame, and on the end surface 5b of the module frame 5 and the end surface 4b of the lens frame 4, respectively.

In this embodiment, as illustrated in FIG. 9, the upper plate spring 6 and the lower plate spring 7 are plate spring members in a plate shape punched into the same shape, and are formed of, for example, a metal plate having a spring property such as stainless (SUS) steel plate.

As illustrated in FIG. 9, the outer shape in a planar view of the upper spring 6 (lower spring 7) is a substantially rectangular shape similar to that of an end on an upper side (lower side) of the module frame 5, and a circular opening 6C (7C) that is slightly larger than the inner circumferential surface 4F of the lens frame 4 and is coaxial with the axis M is formed at the center, whereby the upper plate spring 6 (lower plate spring 7) is formed in a ring shape as a whole.

At three corners and in the vicinity of one corner of the upper plate spring 6 (lower plate spring 7), four through-holes 6B (7B) in which the upper-side fixing pins 14A (lower-side fixing pins 14B) can be inserted respectively are provided correspondingly to the arrangement positions of the upper-side fixing pins 14A (lower-side fixing pins 14B) formed at the corners and in the vicinity of one corner of the module frame 5. In this embodiment, of the through-holes 6B (7B) in which the upper-side fixing pins 14A (lower-side fixing pins 14B) formed at the corners corresponding to the points Q2, Q4 are inserted in FIG 8(b), one is formed in a standard circular hole and the other is formed in an oval hole, which enables the positioning in a plane orthogonal to the axis M with respect to the module frame 5.

Further, on the upper plate spring 6 (lower plate spring 7), four through-holes 6A (7A) in which the upper-side fixing pins 13A (lower-side fixing pins 13B) can be inserted respectively are provided correspondingly to the arrangement position of the upper-side fixing pins 13A (lower-side fixing pins 13B) formed on the lens frame 4.

More specifically, in this embodiment, each through-hole 6A (7A) is formed at a position shifted by an angle θ from an integral multiple of 90° with respect to a straight line L1 corresponding to the line segment K1 in FIG. 8(b). Positions in which those through-holes 6A (7A) are provided are continuous with each other in the circumferential direction through annular portions 6F (7F) along the opening 6C (7C).

In this embodiment, by setting the angle θ to be an appropriate value in such an arrangement, the respective arrangement positions of the through-hole 6A (7A) and the through-hole 6B (7B) can be set in such a manner that the difference between the diameter of a circle with respect to the axis M at which the through-hole 6A (7A) is positioned and the diameter of a circle with respect to the axis M at which the through-hole 6B (7B) is positioned becomes smaller than that in the case where the through-hole 6A (7A) and the through-hole 6B (7B) are placed so that the angle θ becomes 0°.

Further, on an outer side in a radial direction of the opening 6C (7C), there are formed four slits 6D (7D) extending in a substantially semi-arc shape in a circumferential direction from positions in the vicinity of the through-holes 6A (7A) opposed to each other in a diagonal direction with the axis M interposed therebetween in a state where they overlap each other in a radial direction by a substantially quadrant arc on an outer side in a radial direction of the annular portions 6F (7F).

Thus, a plate spring member is formed in which four spring portions 6E (7E) extending in a substantially quadrant arc shape from the rectangular frame on the outer side of the upper plate spring 6 (lower plate spring 7) extend to the vicinity of the through-holes 6A (7A) one by one. In other words, the plate spring members elastically supported equally at 4 positions through the four spring portions 6E (7E) with respect to a rectangular frame body are formed.

As illustrated in FIG. 2, the module lower plate 8 is used for stacking the lower plate spring 7 by sandwiching the lower plate spring 7 between the module lower plate 8 and the module frame 5 from the lower side while the respective lower-side fixing pins 14B of the module frame 5 are inserted in the through-holes 7B of the lower plate spring 7 and the respective lower-side fixing pins 13B of the lens frame 4 housed in the module frame 5 are inserted in the through-holes 7A of the lower plate spring 7, and fixing the outer frame in a rectangular shape of the lower plate spring 7 to the end surface 5b of the module frame 5 in a pressed state.

As illustrated in FIG. 10, the module lower plate 8 is a plate member having a rectangular outer shape substantially similar to the outer shape of the module frame 5, and an opening 8A in a substantially circular shape with respect to the axis M is formed through the center portion of the module lower plate 8 in the thickness direction.

In the opening 8A, four U-shaped run-offs 8d passing through in the thickness direction from the upper surface 8a on which the lower plate spring 7 is stacked to the back surface side are formed at positions corresponding to the arrangement positions of the lower-side fixing pins 13B of the lens frame 4, which extend toward the outer side in the radial direction. This can avoid the interference with the caulking portion of the lens frame 4 described later.

The inner diameter of the circular portion of the opening 8A is designed to have a diameter equal to or lower than the inner diameter of the opening 7C of the lower plate spring 7, and the upper surface 8a constitutes a plane which the spring portion 7E of the lower plate spring 7 and the annular portion 7F can abut against. Therefore, the guide protrusion 4D abuts against the plane via the lower plate spring 7. Thus, the module lower plate 8 constitutes the abutting support portion, and constitutes a support together with the module frame 5 constituting the tubular portion.

Further, at the respective corners positioned at a circumferential edge of the module lower plate 8, through-holes 8C allowing the lower-side fixing pins 14B to be inserted therethrough are formed correspondingly to the arrangement positions of the respective lower-side fixing pins 14B of the module frame 5.

Further, a convex portion 8D protruding downward along the opening 8A is formed on a lower surface 8b of the module lower plate 8. An end surface 8c of the convex portion 8D constitutes an attachment surface that is to abut against the substrate 2 and has a function of a positioning spacer for positioning in the axis M direction with respect to the substrate 2, i.e., in the optical axis direction. The step difference between the end surface 8c and the lower surface 8b of the convex portion 8D is set to be a height at which, when the feeding member 9 is caulked to be assembled to the lower surface 8b, the end surface 8d protrudes to a lower side from the caulked portion.

In this embodiment, as the material for the module lower plate 8, a synthetic resin having an electric insulating property is adopted.

Therefore, the module lower plate 8 functions as an insulating member that fixes the feeding member 9 to the lower plate spring 7 in an electrically insulated state. Further, the module lower plate 8 also functions as an insulating member that keeps an electrically insulated state with respect to the substrate 2 which the end surface 8c abuts against.

As illustrated in FIG. 11, the feeding member 9 includes a pair of electrodes 9a, 9b respectively made of a plate-shaped metal plate in this embodiment.

The electrodes 9a, 9b are formed of a bent line shaped metal plate having a wiring portion 9B in a substantially L-shape along the outer shape of the module lower plate 8 and terminal portions 9C protruding to the outer side of the outer shape of the module lower plate 8 from the end of the wiring portion. Each wiring portion 9B is provided with two through-holes 9A for positioning the electrodes 9a, 9b with respect to the module frame 5 by inserting two lower-side fixing pins 14B adjacent to each other along the outer shape of the module lower plate 8 of the lower-side fixing pins 14B of the module frame 5 protruding downward from the lower surface 8b of the module lower plate 8.

In this embodiment, as illustrated in FIGS. 1 and 3(a), the terminal portions 9C of the electrodes 9a, 9b are provided in the module frame 5 so as to protrude in parallel outward in the radial direction from the side surface on which the wire holding member 15A is attached.

Therefore, the electrode 9a is provided with a conductive connecting portion 9D that is cut away in a concave shape so as to electrically connect the terminal portions 15a of the wire holding member 15A to the side surface on the wiring portions 9B between the through-holes 9A and the terminal portions 9C.

Further, the electrode 9b is provided with a conductive connecting portion 9D that is cut away in a concave shape so as to electrically connect the terminal portions 15a of the wire holding member 15B to the side surface on the wiring portions 9B between two through-holes 9A.

As means for electrically connecting the respective conductive connecting portions 9D to the terminal portions 15a, for example, adhesion through soldering or a conductive adhesive can be adopted.

As illustrated in FIGS. 1 and 12, the cover 11 is a member in which a side wall portion 11D covering the module frame 5 from an outside of the module frame extends downward from an outer edge of an upper surface 11E, an opening 11C in a rectangular shape is formed on a lower side, and a circular opening 11A with the axis M being the center is provided at the center of the upper surface 11E. The size of the opening 11A is designed so that the lens unit 12 can be taken in or out.

Further, as illustrated in FIG. 12, four U-shaped concave portions 11B for avoiding the interference with the caulking portion 16 described later are formed at the positions corresponding to the arrangement positions of the respective upper-side fixing pins 13A of the lens frame 4 in the circumferential direction of the opening 11A on the back surface side of the upper surface 11E.

The depth of the concave portion 11B is set so that the caulking portion 16 and the cover 11 do not come into contact with each other even at a position where the positioning surface 4e and the reception surface 5E1 abut against each other. The concave portion 11B may be concave portion protruding upward to the above of the upper surface 11E. However, in this embodiment, the thickness of the concave portion 11B is set to be small, and the outer surface of the upper surface 11E is set to be a flat surface.

At one corner on the back surface side of the upper surface 11E, a table-shaped coil spring support portion 11a supporting the end of the compression coil spring 40 is formed at a position to be the same height as that of the surface of the upper plate spring 6 attached to the module frame 5 as illustrated in FIG. 3(b) in the assembled state.

On the end surface 11a, a locking dent 11b is formed at a position corresponding to the locking protrusion 4f of the lens frame 4 in the assembled state.

The inner diameter of the locking dent 11b can be inserted in an inner portion of the compression coil spring 40, and is sized so as to be substantially inscribed with the outer circumferential portion of the compression coil spring 40 at a base end. Thus, when the compression coil spring 40 is inserted in the locking dent 11b from below, the compression coil spring 40 can be positioned in the circumferential direction with respect to the axis M while the end of the compression spring coil 40 is allowed to abut against the coil spring support portion 11a.

The compression coil spring 40 has an inner diameter enabling the locking protrusion 4f of the guide protrusion 4D to be inserted in the inner circumferential portion and an outer diameter enabling the locking protrusion 4f to be inserted in the inner circumferential portion of the locking dente 11b, and abuts against the protrusion upper surface 4d of the guide protrusion 4D and the coil spring support portion 11a of the cover 11 in the direction along the axis M and assembled in a compressed state, while the locking protrusion 4f and the locking dent 11b are inserted in both ends.

The compression coil spring 40 is produced with a winding number at which the compression coil spring 40 expands or contracts elastically in an entire range in which the lens frame 4 is driven, and the elastic force in accordance with the distance between the protrusion upper surface 4d and the coil spring support portion 11b are biased respectively to the protrusion upper surface 4d and the coil spring support portion 11ba.

The locking protrusion 4f is provided at a position overlapping the locking position of the SMA wire 10, and hence the acting point of the biasing force from the compression coil spring 40 is positioned on substantially the same straight line parallel to the axis M with respect to the acting point of the biasing force from the SMA wire 10.

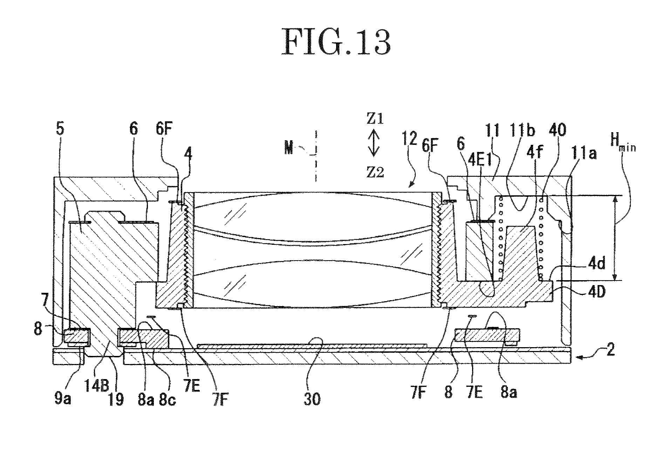

The length of the compression coil spring 40 at a time of assembling is indicated by Hₘₐₓ (see FIG. 3(b)) to Hₘᵢₙ (see FIG. 13). Thus, the load of Fₘᵢₙ to Fₘₐₓ can be biased to the protrusion upper surface 4d.

The load Fₘᵢₙ is set so that the SMA wire 10 in a contracted state corresponding to a temperature Tₑ can expand to an initial length of the SMA wire 10 during the step in which the SMA wire 10 is cooled in a non-energized state, and so that preloading can be performed with the guide protrusion 4D abutting against the module lower plate 8 having the lower plate spring 7 attached thereto. Herein, the temperature Tₑ is a maximum allowable environment temperature under use conditions of the driving module 1.

It is preferred that a spring constant k_{c} of the compression coil spring 40 be set so that the magnitude of ΔF=(Fₘₐₓ-Fₘᵢₙ) is sufficiently smaller compared with Fₘᵢₙ. For example, it is preferred that the spring constant k_{c} be set so as to satisfy 0.1≤ΔF/Fₘᵢₙ≤1.

The driving module 1 with such a configuration is assembled in the following procedure.

First, the lens frame 4 is inserted in the housing portion 5A of the module frame 5 from a lower side, whereby each end surface 5a of the module frame 5 and the end surface 4a of the lens frame 4 are aligned to the same height. Then, the upper-side fixing pins 14A of the module frame 5 and the upper-side fixing pins 13A of the lens frame 4 are inserted in the respective through-holes 6A, 6B of the upper plate spring 6.

After that, the tip ends of the upper-side fixing pins 14A, 13A that protrude upward through the through-holes 6A, 6B of the upper plate spring 6 are caulked with heat by a heater chip (not shown), whereby the caulking portions 16, 17 (see FIGS. 3(b), 4, and 5) are formed. In the case of using ultrasonic caulking, an ultrasonic vibrator is used in place of a heater chip (this also applies to the following thermal caulking).

Next, the lower-side fixing pins 13B of the lens frame 4 are inserted respectively in the through-holes 7A of the lower plate spring 7. At this time, the lower-side fixing pins 14B of the module frame 5 are simultaneously inserted in the through-holes 7B of the lower plate spring 7, the through-holes 8C of the module lower plate 8, and the through-holes 9A of the feeding member 9. After that, the tip ends of the lower-side fixing pins 13B that protrude downward through the through-holes 7A of the lower plate spring 7 are caulked with heat by a heater chip, whereby caulking portions 18 (see FIG. 5) are formed. The run-offs 8d are formed in the module lower plate 8, and hence the caulking portions 18 do not come into contact with the module lower plate 8.

Next, lower ends of the lower-side fixing pins 14B protruding downward through the through-holes 7B, 8C, and 9A are caulked with heat by a heater chip, whereby a caulking portion 19 (see FIG. 3(b) is formed.

Thus, on both ends of the lens frame 4 and the module frame 5, the upper plate spring 6, the lower plate spring 7, the module lower plate 8, and the feeding member 9 are stacked to be fixed. At this time, under a no-loaded state, the respective spring portions 6E, 7E of the upper plate spring 6 and the lower plate spring 7 are in contact with the end surfaces 4a, 4b, and hence, they are parallel to each other. Then, the annular portion 7F of the lower plate spring 7 in contact with the end surface 4b is supported in contact with the upper surface 8a of the module lower plate 8.

Next, a pair of wire holding members 15A, 15B provided with the SMA wire 10 attached to tip ends thereof are locked respectively with locking grooves 5C at two places of the module frame 5, whereby the wire holding members 15A, 15B are held and fixed to the module frame 5 by means such as fitting or adhesion. At this time, the center of the SMA wire 10 is locked with the tip end key portion 4D1 of the guide protrusion 4D and placed across so as to support the tip end key portion 4D1 from a lower side.

At this time, the terminal portions 15a of the wire holding members 15A, 15B protrude to a lower side of the module lower plate 8 and are respectively locked with the conductive connecting portions 9D of the electrodes 9a, 9b that are the feeding member 9 fixed to the module lower plate 8, or placed in the vicinity thereof.

The terminal portions 15a are electrically connected to the conductive connecting portions 9D using, for example, soldering or a conductive adhesive.

Next, the compression coil spring 40 is externally provided on the protrusion upper surface 4d, and one end of the compression coil spring 40 is allowed to abut against the protrusion upper surface 4d. In this state, the cover 11 is placed on the module frame 5 from above. Thus, the other end of the compression coil spring 40 is inserted on the inner circumferential side of the locking dent 11b, and the compression coil spring 40 is compressed with the compression coil spring 40 locked in an up and down direction to be sandwiched between the protrusion upper surface 4d and the coil spring support portion 11b.

Next, the side wall portion 11D is connected to the module lower plate 8. For example, an engagement hook or the like is provided at the side wall portion 11D, and the side wall portion 11D is connected to the module lower plate 8 by fitting. Alternatively, the side wall portion 11D and the module lower plate 8 are connected to each other by adhesion or welding.

Thus, the compression coil spring 40 is compressed from a natural length H₀ to a length Hₘₐₓ, and assembled to the upper surface 8a of the module lower plate 8 via the annular portion 7F under the condition of being preloaded with the load Fₘᵢₙ.

At this time, the caulking portions 16, 17 are respectively away from the back surface of the upper surface 11E of the cover 11.

Thus, the assembly of the driving module 1 is completed.

Next, as needed, the driving module 1 is attached to the substrate 2 with the terminal portions 9C of the driving module 1 being positioned with respect to the land portions 3 on the substrate 2 (see FIG. 1). Then, the terminal portions 9C are electrically connected to the land portions 3 by means such as soldering or a conductive adhesive. At this time, the caulking portions 19 have a height lower than that of the convex portion 8D of the module lower plate 8, and hence, is away from the substrate 2.

As the attachment of the driving module 1 to the substrate 2, fixing means such as adhesion and fitting can be adopted.

The substrate 2 may be an independent member belonging to the driving module 1, or a member connected to and placed at an electronic apparatus or the like.

Next, the lens unit 12 is screwed and fixed in the lens frame 4 through the opening 11A of the cover 11.

The reason why the lens unit 12 is attached finally is to prevent the lens of the lens unit 12 from being contaminated or to prevent dust and the like from adhering to the lens during an assembly operation. For example, in the case where the driving module 1 is shipped in a product state with the lens unit 12 attached thereto, the case where the opening 11A of the cover 11 is desired to be smaller than the outer shape of the lens unit 12, for example, the opening 11A is also used as a diaphragm, the above-mentioned assembling may be performed after the lens unit 12 is screwed in the lens frame 4 in advance.

Next, the operation of the driving module 1 is described.

FIG. 13 is a schematic cross-sectional view taken along the line B-B in FIG. 3(a), for illustrating an operation of the driving module according to Embodiment 1 of the present invention.

The driving module 1 is preloaded with the compression coil spring 40 while the terminal portions 9C are not supplied with power. Therefore, as illustrated in FIG. 3(b), the end surface 4b of the lens frame 4 with the lens unit 12 attached thereto is allowed to abut against the upper surface 8a of the module lower plate 8 via the annular portion 7F.

Thus, the lens frame 4 is positioned at a reference position of driving. The reference position is set so that the focus point position of the lens unit 12 with respect to the image pickup element 30 is infinite in this embodiment.

When power is supplied from the terminal portions 9C to the feeding member 9, the electrode 9a, the wire holding member 15A, the SMA wire 10, the wire holding portion 15b, and the electrode 9b are respectively conducting, and hence a current flows through the SMA wire 10. When Joule heat is generated in the SMA wire 10, and the temperature of the SMA wire 10 increases and exceeds the transformation start temperature of the SMA wire 10, the SMA wire 10 contracts to a length in accordance with the temperature distortion characteristics at a time of heating.

Consequently, the lens frame 4 moves upward (in the (X1) direction of the figure).

More specifically, the spring portions 6E, 7E of the upper plate spring 6 and the lower plate spring 7 are respectively deformed, and an elastic recovery force in accordance with the deformed amount biases the lens frame 4 via the annular portions 6F, 7F. At this time, the upper plate spring 6 and the lower plate spring 7 are parallel to each other under a no-load state, and the respective spring portions 6E, 7E are deformed keeping an equal distance therebetween in the axis M direction, and hence constitute a parallel spring, and the lens frame 4 moves horizontally along the axis M.

Further, the compression coil spring 40 is compressed along with the movement of the guide protrusion 4D, and the elastic recovery force in accordance with the compressed amount biases the guide protrusion 4D. At this time, the acting point of the biasing force from the compression coil spring 40 and the acting point of the biasing force from the SMA wire 10 are placed at substantially the same straight line parallel to the axis M. Therefore, a moment of force with respect to the lens frame 4 hardly occurs. Even when a force larger than that of the upper plate spring 6 and the lower plate spring 7 acts, the moving posture of the lens frame 4 is hardly influenced.

As described above, the lens frame 4 moves horizontally along the axis M, and the lens frame 4 stops at a position where the elastic recovery force is balanced with the tension of the SMA wire 10.

Thus, in this embodiment, through the upper plate spring 6 and the lower plate spring 7, the lens frame 4 can be moved along the axis M precisely without using a guide member in the axial direction in which a sliding load occurs. Therefore, the number of the components can be reduced and miniaturization can be performed.

Further, when the power supply is stopped, the SMA wire 10 is deformed through expanding due to the heat radiation from the SMA wire 10 in accordance with the temperature distortion characteristics during cooling of SMA, and the lens frame 4 moves to a lower balanced position (in the (X2) direction). In this embodiment, the lens frame 4 returns to a reference position as illustrated in FIG. 3(b).

Thus, the lens frame 4 can be driven in the axis M direction through controlling the power supply amount. Further, when the lens frame 4 is driven to a different position, the SMA wire 10 can be driven to a different position precisely irrespective of having hysteresis characteristics at a time of heating and cooling by stopping the power supply to return the lens frame 4 to a reference position and then supplying the power in accordance with the driving amount again.

In the case where the driving module 1 is used under the environment temperature T equal to or higher than the transformation start temperature, in the prior art in which a body to be driven is not preloaded at a reference position, the temperature of the SMA wire 10 does not become lower than the temperature T even when energization is stopped, and hence, the lens frame 4 cannot be returned to the reference position in natural radiation. Therefore, when driving is performed repeatedly, precise driving cannot be performed. In the case where the environment temperature T is too high, the driving by energization itself becomes difficult. The temperature distortion characteristics of the SMA have hysteresis characteristics at a time of heating or cooling, and hence, even under the environment temperature T which does not cause any problem for driving at a time heating, the return position at a time of cooling is shifted considerably with respect to the reference position. Therefore, there is a problem that a repeated driving operation cannot be performed substantially.

According to this embodiment, a preload Fₘᵢₙ by the compression coil spring 40 is set so as to enable the SMA wire 10 in a contraction amount corresponding to the temperature Tₑ at a time of cooling of the SMA wire 10 to expand to the length at the reference position. Therefore, the lens frame 4 can be returned to the reference position precisely as long as the environment temperature T is smaller than Tₑ. Therefore, even when the driving module 1 is used under the environment at a high temperature to some degree, the driving module 1 can be driven while holding satisfactory position precision.

Further, in this embodiment, the compression coil spring 40 functions as a biasing member for preloading the lens frame 4 to a reference position, and the upper plate spring 6 and the lower plate spring 7 function as members for holding the movement direction and the movement posture of the lens frame 4.

For example, when the upper plate spring 6 and the lower plate spring 7 are allowed to have a preloading function, any one of them needs to be bent at a reference position. In this case, a space for deforming it in the axis M direction is required, which increases the thickness of the driving module 1. Further, the plate thickness and the spring length have a degree of freedom of change smaller than that of the coil spring. Therefore, it is difficult to set the preload and the spring constant without variations.

On the other hand, in this embodiment, the preload and the spring constant can be set easily through setting the conditions such as a wire diameter, a winding number, and a spring length of the compression coil spring 40 appropriately, and hence, the driving module 1 can be configured in a compact size.

### [Embodiment 2]

Next, an electronic apparatus according to Embodiment 2 of the present invention is described.

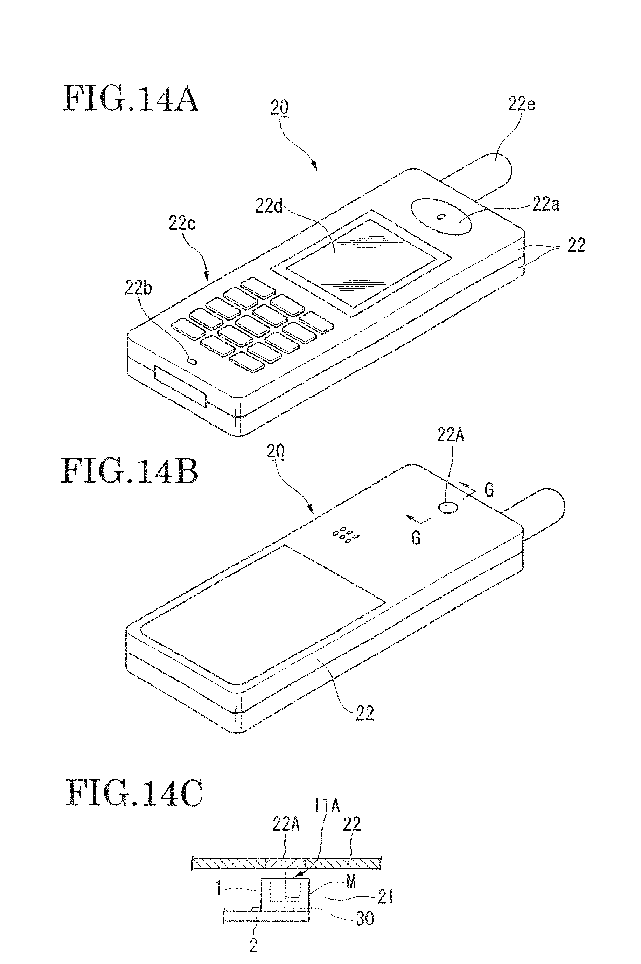

FIGS. 14(a) and 14(b) are external perspective views of a front surface and a back surface of an electronic apparatus according to Embodiment 2 of the present invention. FIG. 14(c) is a cross-sectional view taken along the line G-G in FIG. 14(b).

A mobile phone 20 with a camera in this embodiment illustrated in FIGS. 14(a) and 14(b) is an example of an electronic apparatus having the driving module 1 according to Embodiment 1.

The mobile phone 20 with a camera includes well-known apparatus configurations of a mobile phone such as a receiving portion 22a, a sending portion 22b, an operation portion 22c, a liquid crystal display portion 22d, an antenna portion 22e, and a control circuit portion (not shown) inside and outside of covers 22.

Then, as illustrated in FIG. 14(b), a window 22A transmitting ambient light is provided in the cover 22 on a back surface of the side on which the liquid crystal display portion 22d is provided. As illustrated in FIG. 14(c), the driving module 1 of Embodiment 1 is set so that the opening 11A of the driving module 1 faces the window 22A of the cover 22, and the axis M is placed along the normal direction of the window 22A.

Then, the driving module 1 is mechanically and electrically connected to the substrate 2.

The substrate 2 is connected to the control circuit portion (not shown) so as to supply power to the driving module 1.

According to such a configuration, light transmitted through the window 22A is collected at the lens unit 12 (not shown) of the driving module 1 and can form an image on the image pickup element 30. Then, power is supplied appropriately from the control circuit portion to the driving module 1, whereby a focus position is adjusted by driving the lens unit 12 in the direction of the axis M to perform photographing.

Due to the presence of the driving module 1 of Embodiment 1, the mobile phone 20 with a camera can be miniaturized and produced easily, and, even when used under the environment at a high temperature, the mobile phone 20 with a camera is capable of performing precise focusing.

In Embodiment 1, the case is exemplified in which the compression coil spring 40 is used as the coil spring member. However, the guide protrusion 4D may be pulled to the module lower plate 8 side to be preloaded with a tensile coil spring.

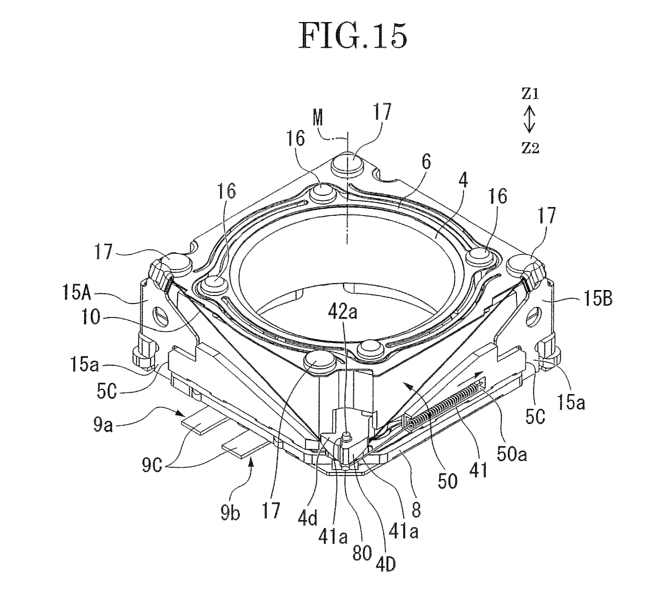

Such a modification is described mainly regarding the point different from Embodiment 1 with reference to FIG. 15. FIG. 15 is a schematic perspective view illustrating an internal configuration of an assembled state of a driving module according to the modification of Embodiment 1 of the present invention.

As illustrated in FIG. 15, the driving module of the modification includes a tensile coil spring 41 (coil spring member) with a tensile wire 41 a having flexibility provided at a tip end side in place of the compression coil 40. Further, a wire locking portion 42a that locks a tip end of the tensile wire 41 a is provided in place of the locking protrusion 4f of the lens frame 4. The tensile wire 41 a is stretched and wound from the side surface of the module lower plate 8 at a position overlapping the guide protrusion 4D along the side of the module lower plate 8 so as to slide along the side during assembly, and a locking protrusion 80 for changing the tensile direction of the tensile wire 41 a is provided. A module frame 50 (support) with a spring housing groove 50a provided on the side surface on which the SMA wire 10 is stretched is provided on the side surface of the module frame 5, in place of the module frame 5.

The tensile coil spring 41 has a tip end of the tensile wire 41 a locked on the locking protrusion 4f, and the tensile wire 41 a is guided by a guide groove on the side surface of the guide protrusion 4D and housed in the spring housing groove 50a of the module frame 50 so as to expand or contract under the condition that the tensile wire 41 a is wound around the locking protrusion 80 to have the tensile direction changed to the side surface side of the module frame 5, whereby the tensile coil spring 41 is fixed to the module frame 50 at an end on an opposite side of the tensile wire 41 a.

In the configuration of the modification, the tensile coil spring 41 is pulled in a direction indicated by an arrow while being housed in a compact size in the spring housing groove 50a on the side of the module frame 50, and preloads the guide protrusion 4D to the module lower plate 8 side on the lower side in the figure via the tensile wire 41 a.

Further, in the above description, the case is described in which the module lower plate 8 and the feeding member 9 are provided; however, they may be omitted in some cases.

For example, in the case where the abutting support portion can be formed integrally with the module frame 5, the module lower plate 8 may be omitted.

In the case where wiring is provided directly on the wire holding members 15A, 15B and an appropriate feeding member is provided on the side surface of the module frame 5, the feeding member 9 can be omitted.

Further, for example, in the case where electrical insulation is not required, e.g., in the case where the feeding member 9 is not stacked on the module lower plate 8, the module lower plate 8 may not be an electrical insulator.

Further, in the above description, although the case of using thermal caulking or ultrasonic caulking is used for assembly is described, the upper-side fixing pins 13A, 14A, and the lower-side fixing pins 13B, 14B may be used for assembly with screws, an adhesive, or the like, in place of the screw portions. In this case, the materials for the body to be driven and the support are not limited to thermoplastic resins that can be caulked.

Further, in the above description, the module frame 5 is a member generally formed into a substantially rectangular shape. However, the module frame 5 may have a polygonal shape without being limited to a substantially rectangular shape. In this case, a rectangular corner can be replaced by a polygonal corner.

Further, in the above description, the case where the feeding member includes the electrodes 9a, 9b is exemplified. However, as the feeding member, one printed board or the like with two-system wiring formed therein may be adopted.

Further, in the above description, the case of using the driving module for the focus point position adjusting mechanism of the lens unit is described. However, the use of the driving module is not limited thereto. For example, the driving module may be used in another portion as an appropriate actuator that moves the body to be driven to a target position. For example, the driving module can be used as an appropriate actuator through screwing a rod member or the like in place of the lens unit 12 or changing the lens frame 4 into another shape.

Further, in the above description, the electronic apparatus using the driving module is described in an example of a mobile phone with a camera. However, the kind of the electronic apparatus is not limited thereto. For example, the driving module may be used in an optical apparatus such as a digital camera or a camera built in a personal computer, or used as an actuator that moves a body to be driven to a target position in an electronic apparatus such as an information reading storage device and a printer.

Further, the components in each embodiment described above may be combined appropriately within the technical concept of the present invention, if possible technically.

## Claims

1. A driving module, comprising:
a body to be driven that is formed of a columnar body with an axis placed in a driving direction, and that is provided with a protrusion protruding to a side of the columnar body;
a support comprising
an abutting support portion that positions the body to be driven at a reference position in the driving direction, and
a tubular portion that movably houses the body to be driven in the driving direction;
a parallel plate spring pair that is attached so as to extend in a direction orthogonal to the driving direction between the body to be driven and the support, and that is placed so as to be opposed to each other in parallel under an unloaded state;
a shape memory alloy wire that is stretched over a tubular outer circumferential portion of the support, and that is provided with an intermediate portion locked on the protrusion of the body to be driven;
a coil spring member that abuts at one end thereof against the protrusion of the body to be driven, and that allows the protrusion to abut against the abutting support portion of the support under a condition that the shape memory alloy wire is deenergized, to thereby preload the protrusion; and
a coil spring support portion that supports another end of the coil spring member.

2. A driving module according to claim 1,
wherein the coil spring member is formed of a compression coil spring attached in the driving direction while being compressed, and
wherein the one end abuts against the protrusion at a position opposed to a locking position of the shape memory alloy wire.

3. A driving module according to claim 1 or 2, wherein the protrusion of the body to be driven comprises the coil spring support portion having 1/3 or more of a natural length of the coil spring.

4. An electronic apparatus comprising the driving module according to any one of claims 1 to 3.
